# EUROPÄISCHE PATENTANMELDUNG

(11) **EP 1 080 768 A1**
(43) Veröffentlichungstag der Anmeldung: **07.03.2001**
(21) Anmeldenummer: 00115695.9
(22) Anmeldetag: 21.07.2000
(51) Int. Cl.: B01D 29/05

(54) **Einfach zu reinigender Druckfilter**

(30) Priorität: 31.08.1999 DE 19941290
(71) Anmelder: InfraServ GmbH & Co. Höchst KG, 65926 Frankfurt am Main (DE)
(72) Erfinder: Simon, Klaus-Jürgen, 65779 Kelkheim (DE); Itter, Klaus, 61184 Karben (DE)
(74) Vertreter: Ackermann, Joachim, Dr.

(57) **Zusammenfassung**

Die Erfindung betrifft einen Druckfilter mit einem Oberteil, einem Unterteil und einer Filterplatte. Der erfindungsgemäße Druckfilter ist in einer bevorzugten Ausgestaltung dadurch gekennzeichnet, daß zwischen dem Oberteil und dem Unterteil ein Zwischenstück (12) angeordnet ist und daß die Filterplatte (2b) an ihrem Rand (2c) mit einen Flanschring (17) verbunden ist und über diesen zwischen dem Zwischenstück (12) und dem Unterteil druckdicht eingeklemmt ist.

## Beschreibung

Die Erfindung betrifft einen Druckfilter, insbesondere eine Drucknutsche wie sie beispielsweise in der chemischen oder pharmazeutischen Industrie zu Filtrationszwecken zum Einsatz kommt.

Behälter der genannten Art sind in der chemischen Industrie seit langem Stand der Technik. Gängige Konstruktionen sind senkrecht stehende Behälter, die einen zylindrischen Mantel aufweisen. Das Filterteil mit der Trennschicht ist als unterer ebener Boden ausgebildet. Nach oben ist der Behälter mit einem Klöpperboden verschlossen und begrenzt so einen Druckraum. Das Filterteil hat sowohl die Funktion eines Filtermediumträgers als auch die eines Druckbehälterdeckels. Dazu muß die Abdichtung des Filterteils gegenüber dem zylindrischen Mantel gleichzeitig die Dichtheit des Druckraums gegenüber der Atmosphäre sicherstellen.

Die bekannten Drucknutschen haben jedoch den Nachteil, daß sie vor Ort schwer zu reinigen sind, insbesondere ist ein Gegenspülen unter Druck nicht möglich.

Je nach Konstruktion und Anordnung des Filterteils können bei der CIP- Reinigung (CIP= **C**leaning **I**n **P**lace) vor Ort Luftpolster unter dem Filterteil entstehen, die eine Reinigung und insbesondere eine Sterilisation im Bereich der Luftpolster verhindern. Dies ist vor allem für Anwendungen in der Pharmazeutischen Industrie ein erheblicher Nachteil.

Der Erfindung lag daher die Aufgabe zugrunde, die bekannte Drucknutsche zu verbessern, insbesondere unter dem Aspekt der CIP-gerechten Reinigung.

Diese Aufgabe wird erfindungsgemäß gelöst durch einen Druckfilter aufweisend ein Oberteil mit ersten Verbindungsmitteln und mit einem Eingang für eine zu filtrierende Suspension, eine Trennschicht zur Abtrennung von Feststoffen aus der Suspension und ein Unterteil mit zweiten Verbindungsmitteln und mit einem Ausgang für die filtrierte Suspension, wobei zwischen dem Oberteil und dem Unterteil ein Zwischenstück mit dritten Verbindungsmitteln und vierten Verbindungsmitteln angeordnet ist, wobei das Zwischenstück über die dritten und ersten Verbindungsmittel mit dem Oberteil und über die vierten und zweiten Verbindungsmittel mit dem Unterteil verbunden ist, und wobei zwischen dem Unterteil und dem Zwischenstück oder im Zwischenstück die Trennschicht angeordnet ist.

Die Verbindungsmittel sind vorzugsweise als Flansche ausgeführt. Andere geläufige Mittel wie Spannklammern oder Pratzen können jedoch ebenfalls erwendet werden. Erfindungsgemäße Druckfilter haben vorzugsweise einen Rauminhalt von mehr als 80 bis 300 Litern bis hin zu ein oder mehreren Kubikmetern und eignen sich zur Druckfiltration bei 0 bis 2, oder vorzugsweise bis 4, 8, 10, 16 bar Absolutdruck.

Eine besondere Ausgestaltung ist dadurch gekennzeichnet, daß die Trennschicht eine Filterplatte mit einem Flanschring ist, der zwischen dem Zwischenstück und dem Unterteil druckdicht eingeklemmt ist.

Im folgenden wird der erfindungsgemäße Druckfilter anhand der Schnittbilder in den Figuren 1 bis 3 näher erläutert. Eine Beschränkung der Erfindung in irgendeiner Weise ist dadurch nicht beabsichtigt.

Es zeigt:
Fig. 1: Schnittbild einer ersten Ausgestaltung des erfindungsgemäßen Druckfilters;
Fig. 2 Schnittbild einer zweiten Ausgestaltung entsprechend dem Detail X aus Fig. 1;
Fig.3: Schnittbild einer dritten Ausgestaltung entsprechend dem Detail X aus Fig. 1.

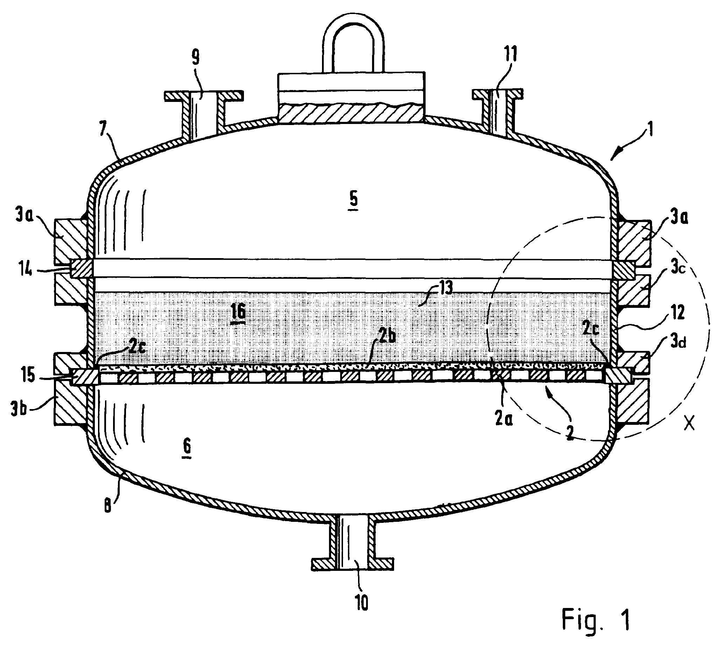

Die Figur 1 zeigt einen erfindungsgemäßen Behälter (Drucknutsche) 1 mit einem Oberteil 7, einem Unterteil 8 und ersten und zweiten Verbindungsmitteln, die vorzugsweise als Flansche 3a, 3b ausgebildet sind. Zwischen dem Oberteil 7 und dem Unterteil 8 ist ein Zwischenstück 12 mit dritten und vierten Verbindungsmitteln, die vorzugsweise als dritter Flansch 3c und vierter Flansch 3d ausgebildet sind, angeordnet. Das Zwischenstück 12 ist über den dritten und ersten Flansch 3d, 3a mit dem Oberteil verbunden und über den vierten und zweiten Flansch 3d, 3b mit dem Unterteil 8. Zwischen dem Unterteil 8 und dem Zwischenstück 12 bzw. zwischen dem zweiten und vierten Flansch 3b, 3d ist ein durchlässiger Boden 2a, auf dem eine Trennschicht 2b, beispielsweise eine Filterplatte, aufgelegt ist, angeordnet bzw. zwischen dem zweiten und vierten Flansch 3b, 3d über einem Dichtring 15 druckdicht eingeklemmt. Je nach Dimensionierung kann es vorteilhaft sein, den Dichtring 15 an der dem Unterteil 8 zugewandten Seite schräg auszugestalten, so daß bei einer Reinigung über das Unterteil 8 (Gegenspülung) keine Luftpolster zurückgehalten werden. Die Trennschicht 2b, vorzugsweise eine sogenannte Poroplate - Fritte, ist am Rand 2c gegen das Zwischenstück 12 und den durchlässigen Boden 2a abgedichtet. Zwischenstück 12, durchlässiger Boden 2a mit Trennschicht 2b bilden zusammen einen Filterkorb 2. Im Raum 16, den der Filterkorb 2 umgibt, verbleibt nach der Filtration ein Filterkuchen 13.

Durch den Filterkorb 2 ist der Behälter 1 in einen ersten Raum 5 und einen zweiten Raum 6 unterteilt. Eine Suspension, die einen Feststoff enthält, kann über einen Stutzen 9 zugegeben werden. Dabei kann es sinnvoll sein, nur soviel Suspension zuzugeben, daß die Füllung den oberen Rand des Filterkorbes 2 bzw. den des Zwischenstückes 12 nicht erreicht. Nach Beendigung der Zugabe kann über den Stutzen 11 mit Luft oder einem anderen geeignete Gas Druck auf die Suspension ausgeübt werden, wodurch die Flüssigkeit durch die Trennschicht 2b in den zweiten Raum 6 gedrückt wird und der Feststoff als Filterkuchen auf der Trennschicht 2b zurückbleibt. Das Filtrat kann über einen Stutzen 10 abgeführt werden. Sobald die Flüssigkeit aus den Makroporen des Filterkuchens verdrängt ist, kann mit dem Gas noch weiter getrocknet werden. Nach Beendigung dieser Filtration kann der Druck entspannt werden. Dann können die Flansche 3a, 3c gelöst und das Oberteil 7 abgehoben werden. Zum Reinigen durch Gegenspülen kann anschließend eine Reinigungsflüssigkeit oder Sterilisationsflüssigkeit durch den Stutzen 10 unter Druck in den Raum 6 eingelassen werden. Je nach Bedarf kann die Reinigung auch die Räume 16 und 5 (bei aufgesetztem Oberteil 7) mit erfassen, da die Flüssigkeit durch die Trennschicht 2b gedrückt werden kann. Da sich keine Luftpolster bilden können, kann eine zuverlässige Reinigung bzw. Sterilisation erfolgen.

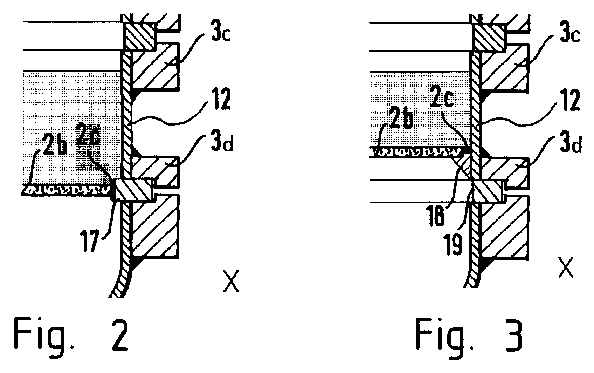

In der zweiten Ausgestaltung gemäß Fig. 2 ist die Trennschicht 2b mit einem Flanschring 17 verbunden und über diesen zwischen Zwischenstück 12 und Unterteil 8 druckdicht eingeklemmt, wobei die üblichen Dichtungen nicht eingezeichnet sind. Auch dieser Flanschring kann vorteilhafterweise auf seiner Unterseite schräg ausgestaltet sein, wie in Fig. 3 anhand eines umlaufenden Vorsprungs 18 beispielhaft gezeigt.

In einer dritten Ausgestaltung ist die Trennschicht 2b innerhalb des Zwischenstücks 12 auf einem an der Innenwand des Zwischenstücks umlaufenden Vorsprung 18 angeordnet. Die Dichtheit zwischen Zwischenstück 12 und Unterteil 8 wird in diesem Fall über einen Dichtring 19 hergestellt.

Die Vorteile der Erfindung sind im wesentlichen darin zu sehen, daß der erfindungsgemäße Druckfilter einfacher zu reinigen und einfach in der Handhabung ist und die Ansprüchen aus der CIP - gerechten Reinigung erfüllt.

## Patentansprüche

1. Druckfilter aufweisend ein Oberteil (7) mit ersten Verbindungsmitteln (3a) und mit einem Eingang (9) für eine zu filtrierende Suspension, eine Trennschicht (2b) zur Abtrennung von Feststoffen aus der Suspension und ein Unterteil (8) mit zweiten Verbindungsmitteln (3b) und mit einem Ausgang (10) für die filtrierte Suspension, wobei zwischen dem Oberteil (7) und dem Unterteil (8) ein Zwischenstück (12) mit dritten Verbindungsmitteln (3c) und vierten Verbindungsmitteln (3d) angeordnet ist, wobei das Zwischenstück (12) über die dritten und ersten Verbindungsmittel (3c, 3a) mit dem Oberteil (7) und über die vierten und zweiten Verbindungsmittel (3d, 3b) mit dem Unterteil (8) verbunden ist, und wobei zwischen dem Unterteil (8) und dem Zwischenstück (12) oder im Zwischenstück (12) die Trennschicht (2b) angeordnet ist.

2. Druckfilter nach Anspruch 1, wobei die Trennschicht (2b) eine Filterplatte mit einem Flanschring (17) ist, der zwischen dem Zwischenstück (12) und dem Unterteil (8) druckdicht eingeklemmt ist.

3. Druckfilter nach Anspruch 1, wobei die Trennschicht (2b) im Zwischenstück (12) auf einem umlaufenden Vorsprung (18) angeordnet ist.

4. Verwendung von Druckfiltern nach einem oder mehreren der Ansprüche 1 bis 3 zur Filtration von Stoffen für pharmazeutische Anwendungen.
